(19) Europäisches Patentamt
European Patent Office
Office européen des brevets

(11) Publication number: **0 137 210 B1**

(12) **EUROPEAN PATENT SPECIFICATION**

(45) Date of publication of patent specification: **02.01.92**

(51) Int. Cl.5: **C09K 19/42**, C09K 19/34, C09K 19/30

(21) Application number: **84109536.7**

(22) Date of filing: **10.08.84**

(54) **Liquid-crystal composition.**

(30) Priority: **30.08.83 JP 158510/83**

(43) Date of publication of application:
**17.04.85 Bulletin 85/16**

(45) Publication of the grant of the patent:
**02.01.92 Bulletin 92/01**

(84) Designated Contracting States:
**CH DE GB LI**

(56) References cited:
**GB-A- 2 077 286**
**GB-A- 2 107 733**
**US-A- 4 066 570**

(73) Proprietor: **MERCK PATENT GESELLSCHAFT MIT BESCHRÄNKTER HAFTUNG**
**Frankfurter Strasse 250 Postfach 4119**
**W-6100 Darmstadt(DE)**

Proprietor: **SHARP CORPORATION**
**22-22, Nagaike-cho Abeno-ku**
**Osaka 545(JP)**

(72) Inventor: **Ishii, Yutaka**
**905 Excel Heights Nara 1-5-5 Omiya-cho**
**Nara-shi Nara-ken(JP)**
Inventor: **Funada, Fumiaki**
**33-10 Izumihara-cho**
**Yamatokoriyama-shi Nara-ken(JP)**
Inventor: **Matsuura, Masataka**
**60 Nishinagara-cho**
**Tenri-shi Nara-ken(JP)**

(74) Representative: **Schüttler, Reinhard, Dr.**
**Merck Patent GmbH Postfach 4119**
**W-6100 Darmstadt 1(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services

## Description

The present invention relates to a liquid-crystal composition and more particularly to a liquid-crystal composition to be used in multiplex-driving system in twisted nematic (TN) type liquid-crystal display devices.

In recent years, larger information-content is demanded in the field of liquid-crystal display devices. Accordingly, the matrix displays are preferred to the conventional segment displays. In the matrix display, the multiplexity (N) in the multiplex driving is demanded to be increased to 32, 64, or more so as to further diversify the information content.

Drive a liquid-crystal device of X-Y matrix type by the optimized amplitude-selecting method of the multiplexity and the ratio $\alpha$ of the effective voltage Vrms (on) in the selected picture-element to the effective voltage Vrms (off) in the non-selected picture-element is given as well known by the following formula.

$$\alpha = \frac{Vrms(on)}{Vrms(off)} = \sqrt{\frac{\sqrt{N}+1}{\sqrt{N}-1}}$$

When the N is $\infty$ in the formula, the $\alpha$ becomes 1. As apparent from this formula, the ratio of the Vrms(off) to the Vrms(on) should be smaller as the multiplexity N increases. Accordingly, the matrix type liquid-cristal display devices of high information content require a liquid-cristal material of sharp threshold characteristics, i.e., of superior contrast ratio provided by the small voltage ratio. The threshold characteristics of the conventional liquid-crystal material as for example described in GB-A-2 077 286, GB-A-2 107 733 or US-A-4 066 570 were not good enough that problems such as low display contrast, narrow effective viewing-angle range, etc. were caused under the matrix driving operation of the liquid-crystal panel wherein the N became a large value of 32 or higher.

SUMMARY OF THE INVENTION

The present invention has, accordingly, its essential object to provide an improved liquid-crystal composition substantially free from the above-described disadvantages.

In order to accomplish this and other objects of the present invention, a primary composition, which is suitable for the matrix driving operation, is provided.

According to the present invention, there provides a mixed nematic liquid-crystal composition which comprises:

- a 2-(4-alkoxyphenyl)-5-alkylpyrimidine compound of the formula

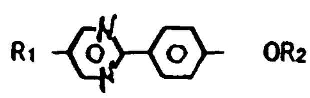

wherein $R_1 = C_nH_{2n+1}$, $R_2 = C_mH_{2m+1}$, n = 1-12 and m = 1-12;

- a cyanobiphenyl compound which is a member selected from the group consisting of

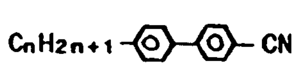 , wherein n = 2 - 6

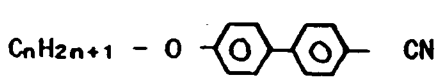 , wherein n = 1 - 7

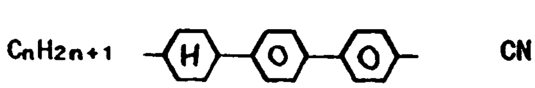 , wherein n = 1 - 7;

- a low-viscosity material satisfying the following two conditions:
  (1) molecular terminal groups are alkyl group or alkoxy group, and
  (2) viscosity ($\eta$) at 20 °C temperature is 20 $mm^2.s^{-1}$ or lower; and

- a high clearing-point material satisfying the following four conditions:
  (1) molecular terminal groups are alkyl group or alkoxy group,
  (2) molecule has at least one cyclohexane ring or more therein,
  (3) molecule does not contain one or more ester linkages; and
  (4) clearing point ($T_{cp}$) is 100 °C or higher,

characterized in that the composition comprises one or more compounds which are effective in preventing the formation of the smectic phase, said compound(s) being selected from the group consisting of:

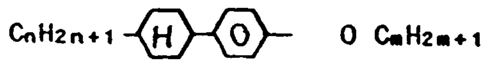 (n = 1-4, m = 1-4)

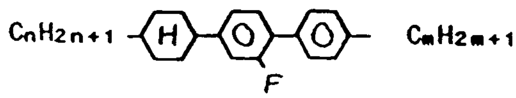 (n = 1-7, m = 1-7)

Particularly the invention resides in a mixed nematic liquid-crystal composition, wherein said low-viscosity material comprises at least one compound which is a member selected from the group consisting of:

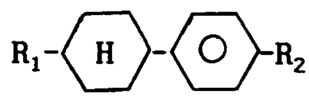

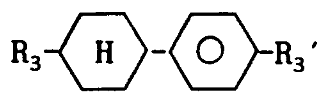

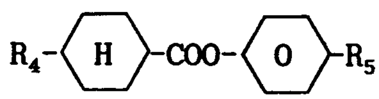

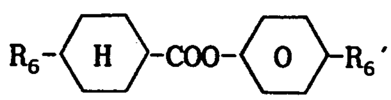

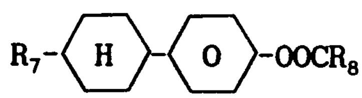

wherein $R_1$ through $R_8$ represent a straight-chain alkyl group of 1 to 6 carbon atoms and $R_3$' and $R_6$' represent straight-chain alkoxy groups of 1 to 6 carbon atoms, and in a mixed nematic liquid-crystal composition wherein the high clearing-point material comprises at least one compound which is a member selected from the group consisting of:

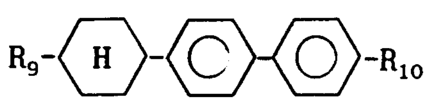

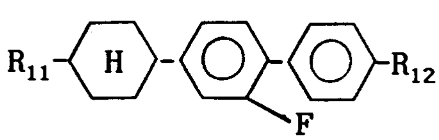

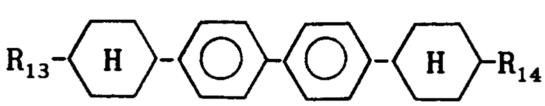

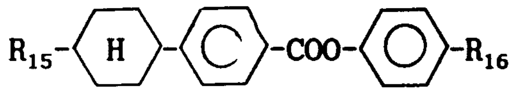

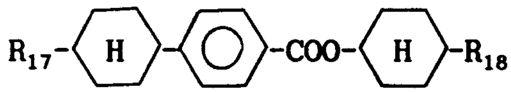

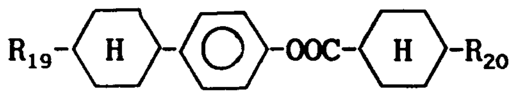

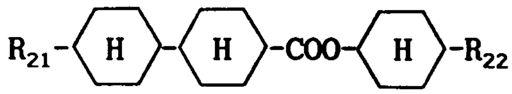

wherein $R_9$ through $R_{22}$ show a straight-chain alkyl group of 1 through 10 in the number of carbon atoms.

## BRIEF DESCRIPTION OF THE DRAWINGS

These and other objects and features of the present invention will be disclosed by the following description taken in conjunction with preferred embodiments thereof with reference to the accompanying drawings, in which:

Fig. 1(a) is a perspective view for showing the definition of a measuring direction $\theta$, the 1, 2, and 3 thereof indicating polarizer, liquid-crystal cell, and incident light, respectively;

Fig. 1(b) is a graph for showing the definition of $\alpha^{\theta}$ ($\theta = 0°, 15°, 30°, 45°$) and

$$\gamma^{15°,\ 50\%}_{45°,\ 90\%};$$

Fig. 2(a) and (b), are graphs for showing the addition effects of various compounds of positive dielectric anisotropy on electrooptical characteristics;

Fig. 3 is a phase diagram for the mixture system of the composition 3 and the composition 4; and

Fig. 4 is a phase diagram for the mixture system of the composition 3 and the composition 5.

## DETAILED DESCRIPTION OF THE INVENTION

To obtain sharp threshold characteristics in the TN type liquid-crystal display devices, the liquid-crystal composition is required to be composed of a material as small as possible in the elastic constant ratio $K_{33}/K_{11}$, wherein $K_{11}$ is elastic constant for splay and $K_{33}$ is elastic constant for bend. The present inventors have found out that 2-(4-alkoxyphenyl)-5-alkylpyrimidines,

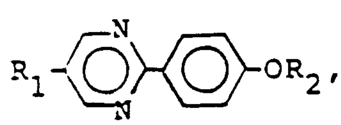

wherein $R_1 = C_nH_{2n+1}$, $R_2 = C_mH_{2m+1}$, n, m = 1 through 12, are the most desirable from this point of view after the examination of many kinds of compounds. Namely, the elastic constant ratio of phenylcyclohexane series liquid-crystal, biphenyl series liquid-crystal, cyanopyrimidine series liquid-crystal, dioxane series liquid-crystal, ester series liquid-crystal or the like is approximately 1.0 through 2.0 in distribution, while this material is as extremely small as approximately 0.6 in value. Then, the electrooptical characteristics of the TN type liquid-crystal display element using the compound has been examined by the present inventors.

To exemplify the usefulness of the pyrimidines, the characteristics of a pyrimidine liquid-crystal mixture of which the composition is shown in Table 1 (hereinafter referred to as composition 1) and the characteristics of conventional materials for matrix driving sold on the market are shown for comparison in Table 2. The ZLI-1701 (produced by E. Merck of West Germany) is mainly composed of phenyl-cyclohexane series liquid-crystal, the E-90 (produced by BDH Chemicals Ltd. of Great Britain) is mainly composed of ester series liquid-crystal, and the RO-TN-403 (produced by F. Hoffmann-La Roche & Co., Ltd. of Switzerland) is mainly composed of biphenyl series liquid-crystal and cyanopyrimidine series liquid-crystal. The definitions of

$$V_{90\%}^{0°},$$

$\alpha^{\theta}(\theta = 0°, 15°, 30°, 45°)$, and

$$\gamma_{45°, 90\%}^{15°, 50\%}$$

are shown in Fig. 1. As apparent from Fig. 1, the $\alpha^{\theta}$ are evaluation factors corresponding to the contrast characteristics, while the

$$\gamma_{45°, 90\%}^{15°, 50\%}$$

is an evaluation factor corresponding to the viewing angle characteristics. Both of them are desired to be smaller in value for better display devices.

The comparison among the liquid-crystal compositions of Table 2, considering the above-described fact, indicates that the composition 1 is extremely superior in characteristics to the other liquid-crystal compositions. Also, this fact agrees with the prediction from the examination results of the above-described elastic constant ratio $K_{33}/K_{11}$. It is confirmed by the above-described results that the 2-(4-alkoxyphenyl)-5-alkylpyrimidines are extremely suitable components constituting matrix driving materials.

However, as this material is smaller ($\Delta\epsilon = \sim 0.6$) in dielectric anisotropy represented by a formula of $\Delta\epsilon$-($\Delta\epsilon = \epsilon_{//} - \epsilon_{\perp}$, wherein $\epsilon_{//}$ is dielectric constant along the direction parallel to molecular long-axis, and $\epsilon_{\perp}$ is dielectric constant along the direction parallel to molecular short-axis), the threshold voltage,

$$V_{90\%}^{0°},$$

becomes higher as clear from Table 2. Accordingly, in the practical use, the material is required to be used in combination with compounds of large positive value of $\Delta\epsilon$, which are called p-type compounds. The present inventors have examined the p-type compounds concerning their effects on the threshold voltage and electrooptical characteristics when they are used in combination with the pyrimidines. These compounds are collectively shown in Table 3.

**Table 1**

**Composition 1**

| Component | Weight % |
|---|---|
| 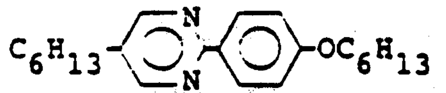 | 16.6 |
| 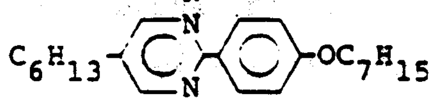 | 16.6 |
| 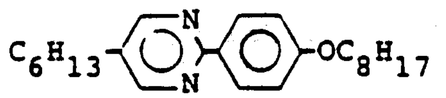 | 16.6 |
| 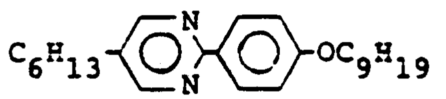 | 16.6 |
| 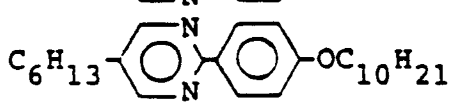 | 16.6 |
| 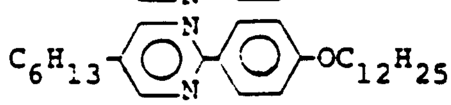 | 16.6 |

**Table 2**

| | Composition 1 | ZLI-1701 | E-90 | RO-TN-403 |
|---|---|---|---|---|
| $V^{0°}_{90\%}$ (V) | 6.80 | 1.78 | 1.32 | 1.43 |
| $\alpha^{0°}$ | 1.39 | 1.42 | 1.39 | 1.42 |
| $\alpha^{15°}$ | 1.20 | 1.33 | 1.28 | 1.28 |
| $\alpha^{30°}$ | 1.14 | 1.27 | 1.23 | 1.21 |
| $\alpha^{45°}$ | 1.11 | 1.24 | 1.20 | 1.18 |
| $\gamma^{15°,50\%}_{45°,90\%}$ | 1.18 | 1.33 | 1.36 | 1.40 |

The p-type compositions of No. 1 through No. 5 are mixtures of homologs (propyl and pentyl) mixed at 1 : 1 by weight. The threshold voltage

$(V^{0°}_{90\%})$,

contrast characteristics ($\alpha^{30°}$, $\alpha^{45°}$) and viewing-angle characteristics

$(\gamma^{15°,\ 50\%}_{45°,\ 90\%})$

of mixtures wherein those p-type compositions are added to the composition 1 at 20% by weight, respectively, are shown in Fig. 2. It can be found out from the graphs that the threshold voltages are lowered to 3V or lower due to the addition of the compositions, No. 1 through No. 5, and can be adjusted to practical values. Also, the contrast characteristics ($\alpha^{30°}$, $\alpha^{45°}$) become better in the order of (bad): No. 1 < No. 2≈No. 3 ≦ No. 4 ≦ No. 5 (good), and the viewing angle characteristics become better in the order of (bad): No. 1 < No. 2≈No. 3 < No. 4≈No. 5 (good). The further comparison between the No. 4 and No. 5 in response and recovery times indicates that the No. 5 is superior to No. 4 in bringing about faster response and recovery by approximately 15%. It is apparent from the above-described results that the No. 5 is the most desirable.

Also, according to similar examination on

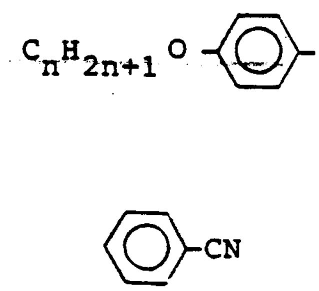

(n = 1 through 7) and

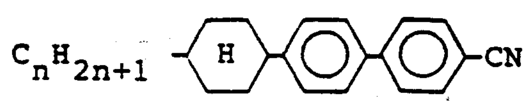

(n = 1 through 7), which are compounds each having cyanobiphenyl moiety, similar results as in the composition No. 5 are provided. In addition, it is confirmed that similar results are provided about the pyrimidine series compounds

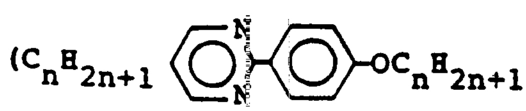

n = 1 through 5, 7 through 12, m = 1 through 5), which are different in number of carbon atoms from the composition 1. As apparent from the examination results, the cyanobiphenyl series compounds are the most effective as a p-type component to be combined with the 2(4-alkoxyphenyl)-5-alkylpyrimidines.

As these mixtures are, however, as high as approximately 70 through 90 $mm^2 \cdot s^{-1}$ in the viscosity at 20°C, they are inferior in response characteristics. They also have problems that undesirable smectic phases arise when the pyrimidine series compounds and the cyanobiphenyl series compounds are mixed to result in narrowing of nematic temperature range as a mixture. Therefore, these mixtures are not sufficient yet to meet the requirement as practical materials. To solve these problems, other substances to be added thereto are examined.

Firstly, to have the wider nematic temperature range and the lower viscosity of composition, addition of low-viscosity material and high clearing-point material is required. The high clearing-point material is more desirable if the viscosity becomes lower. After the examination of the various compounds and mixed

compounds from these points of view, the present inventors have found out through their experiences that the compositions, which have nematic range from 0 ° C through 60 ° C, and are 35 $mm^2 \cdot s^{-1}$ or lower in the viscosity at 20 ° C, can be provided through the various combinations of compounds satisfying the following two conditions as the low-viscosity materials,

(1) molecular terminal groups are alkyl group or alkoxy group, end

(2) viscosity ($\eta$) of 20 ° C at temperature is 20 $mm^2 \cdot s^{-1}$ or lower,

and of compounds satisfying the following four conditions as the high clearing-point materials,

(1) molecular terminal groups are alkyl group or alkoxy group,

(2) molecule has at least one cyclohexane ring or more therein,

(3) molecule does not contain ester linkage or does not contain two ester linkages or more if it does, and

(4) clearing point ($T_{cp}$) is approximately 1000 ° C or higher.

Concrete low-viscosity compounds are as follows.

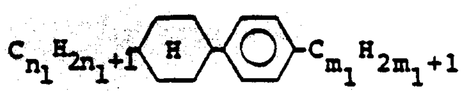
($n_1$, $m_1$ = 1 through 6)

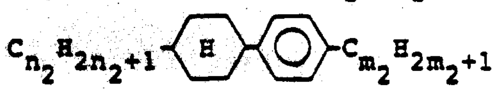
($n_2$, $m_2$ = 1 through 6)

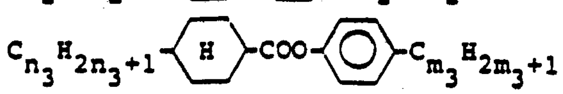
($n_3$, $m_3$ = 1 through 6)

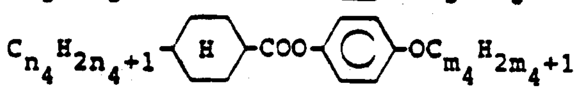
($n_4$, $m_4$ = 1 through 6)

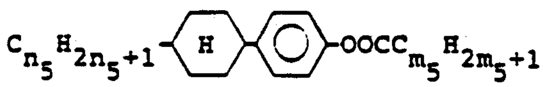
($n_5$, $m_5$ = 1 through 6)

, while the high melting-point materials are as follows.

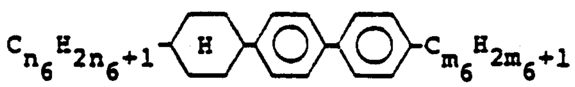
($n_6$, $m_6$ = 1 through 10)

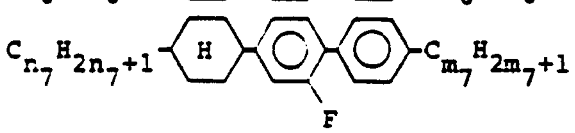
($n_7$, $m_7$ = 1 through 10)

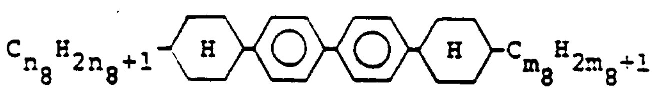
($n_8$, $m_8$ = 1 through 10)

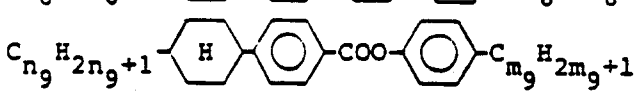
($n_9$, $m_9$ = 1 through 10)

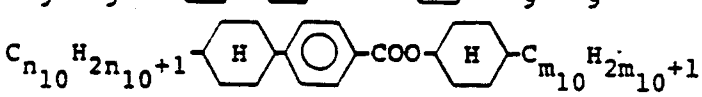
($n_{10}$, $m_{10}$ = 1 through 10)

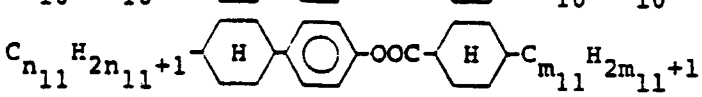
($n_{11}$, $m_{11}$ = 1 through 10)

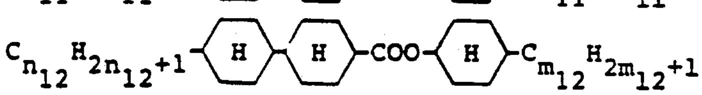
($n_{12}$, $m_{12}$ = 1 through 10)

Secondly, combination of the pyrimidine series compounds and cyanobipheyl series compounds has a problem that undesirable induced smectic phase or the mixed condition of the smectic phase and the other phase, i.e., nematic phase or the like is likely to arise within the practical temperature range due to the mixture ratio of both compounds. After the examination of the various substances which prevent the formation of the smectic phase, the present inventors have found out that compounds of structure of

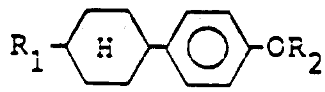

($R_1 = C_nH_{2n+1}$, $R_2 = C_mH_{2m+1}$ n,m = 1 through 4) are extremely effective. For example, add, to the composition 1 as the pyrimidine series compounds, a liquid-crystal composition (hereinafter referred to as composition 2) wherein

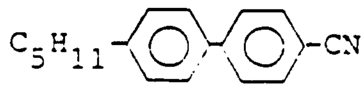 and 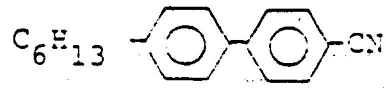

are mixed at 1 : 1 by weight, and the smectic phase or a condition where the smectic phase and nematic phase are mixed with each other at room temperature within a range wherein the addition amount of the mixture of the latter is approximately 30% through 80% is formed. Add, to the mixture (hereinafter referred to as composition 3) of the composition 1 and the composition 2 mixed at 3:2 by weight, a mixture (hereinafter referred to as composition 4) wherein

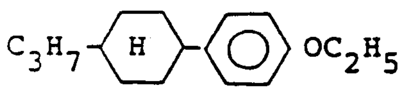 and 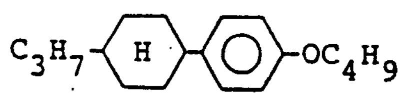

are mixed at 1:1 by weight, and the inclination wherein the Tsn (the smectic phase-nematic phase transition temperature) lowers is considerable as shown in Fig. 3. Accordingly, the stable nematic phase is provided at the room temperature. Also, the similar effects are confirmed when

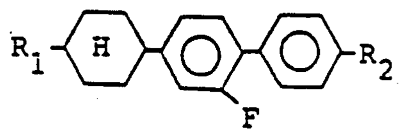

wherein $R_1 = C_nH_{2n+1}$, $R_2 = C_mH_{2m+1}$, n, m = 1 through 7, is used. Such effect is extremely considerable as compared with the other substance such as

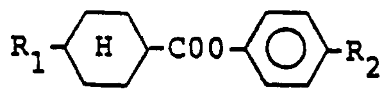,

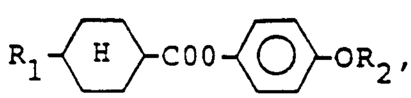, 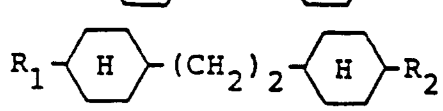,

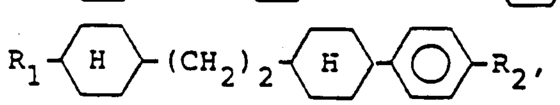,

($R_1 = C_nH_{2n+1}$, $R_2 = C_mH_{2m+1}$) and the like. Fig. 4 shows an example (hereinafter referred to as composition 5), for comparison, of a mixture of compounds wherein

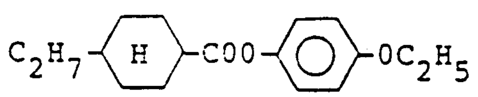 and 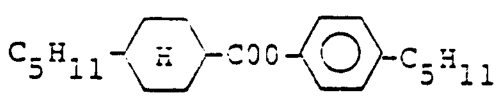

have been mixed at 1:1 by weight.

As apparent from the above-described results, it is found out that a compound, which has a structure of

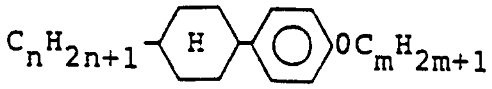 (n, m= 1 through 4) or

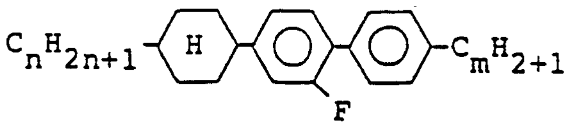 (n, m=1 through 7),

is better to be positively used when the undesirable smectic phase arising from the pyrimidine series compound and cyanobiphenyl series compound becomes a problem.

The compositions of the present invention provide mixed liquid-crystal materials which are sufficiently practical in threshold voltage and nematic temperature range and are remarkably superior to the conventional materials in display characteristics. It is confirmed that the effects are caused when the pyrimidine series compounds and biphenyl series compounds in the mixed liquid-crystal material are respectively 3% or more by weight in content. The embodiments will be shown as follows.

Embodiment 1

A liquid-crystal composition of the present embodiment will be shown in Table 4.

Heating and mixing operations were effected until the composition became transparent liquid under no-pressure at such composition ratio as shown in this table to produce liquid-crystal composition. The liquid-crystal composition was a nematic over a temperature range from -10° C to 77° C.

The liquid-crystal composition was sealed into a TN type cell which had beforehand been provided with the twist directional treatment. Measurement was done in transmissive way through the TN-cell provided with polarizers on its both sides at location of crossed nicols. The thickness of the liquid-crystal layer was set in 5.4 µm.

The electrooptical characteristics of the liquid-crystal display device using the present embodiment are shown in Table 6 along with those of conventional liquid-crystal composition of ZLI-1701 shown in Table 2 for comparison.

Table 4

| Compounds | Composition ratio (wt%) |
|---|---|
| 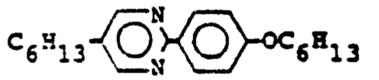 | 5.5 |
| 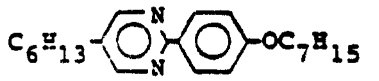 | 5.5 |
| 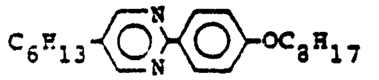 | 5.5 |
| 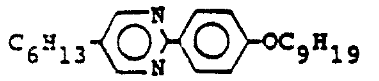 | 5.5 |
| 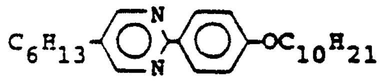 | 5.5 |
| 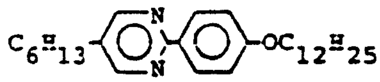 | 5.5 |
| 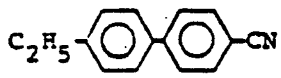 | 6.7 |
| 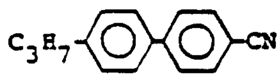 | 5.4 |
| 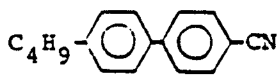 | 4.7 |
| 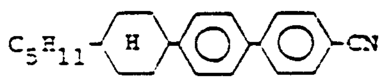 | 4.7 |
| 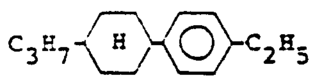 | 11.4 |
| 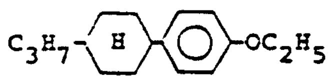 | 6.7 |
| 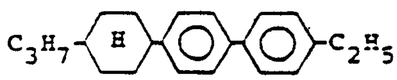 | 1.3 |
| 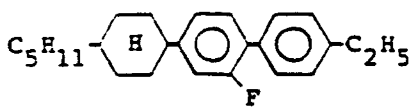 | 10.0 |
| 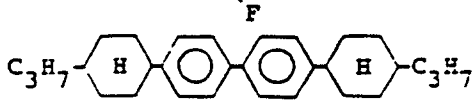 | 2.7 |
| 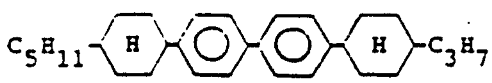 | 4.0 |
| 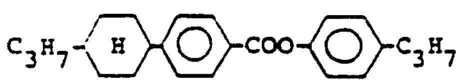 | 5.4 |
| 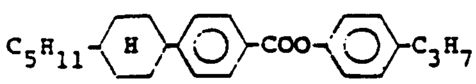 | 4.0 |

Embodiments 2

A liquid-crystal composition of the present embodiment will be shown in Table 5.

Heating and mixing operations were effected until the composition became transparent liquid under no-pressure at such composition ratio as shown in this table to produce liquid-crystal composition. The liquid-crystal composition was a nematic over a temperature range from -10 °C to 73 °C.

The characteristics of the liquid-crystal display device using the present embodiment are shown in Table 6. The structure of the display element used here is the same as that described in the embodiment 1.

As apparent from Table 6, the liquid-crystal composition of the present embodiments 1, 2 are extremely improved in contrast ($\alpha$ value) and viewing angle ($\gamma$ value) characteristics as compared with the conventional one, and have no problems in practical use even in threshold voltage and response and recovery times. Accordingly, the usefulness of the present invention in the liquid-crystal composition can be again confirmed. As described hereinabove, the present invention is not restricted to these embodiments.

As the liquid-crystal composition of the present invention is extremely superior in its display characteristics as described hereinabove, it can sufficiently meet the demands to increase information content of various liquid-crystal display apparatuses of multiplexing operation at a high-level multiplexing such as character display devices graphic display devices and the like. The liquid-crystal composition is more considerable in its usefulness than the validity thereof in half-tone display especially when it is used in a liquid-crystal television.

Table 5

| Compounds | Composition ratio (wt%) |
|---|---|
| 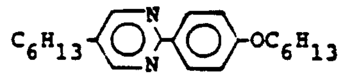 | 5.5 |
| 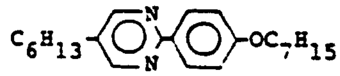 | 5.5 |
| 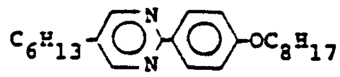 | 5.5 |
| 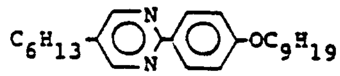 | 5.5 |
| 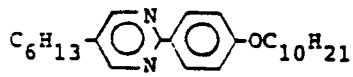 | 5.5 |
| 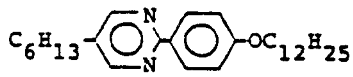 | 5.5 |
| 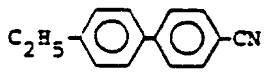 | 4.1 |
| 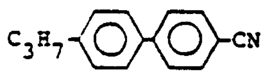 | 4.1 |
| 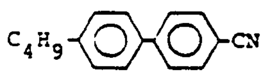 | 4.3 |
| 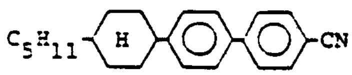 | 3.5 |
| 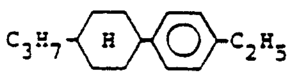 | 8.5 |
| 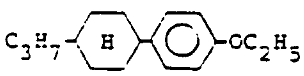 | 5.0 |
| 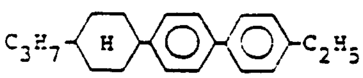 | 1.0 |
| 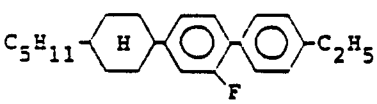 | 7.5 |
| 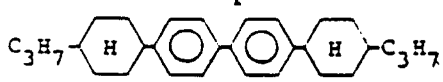 | 2.5 |
| 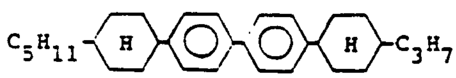 | 2.5 |
| 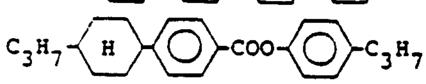 | 3.5 |
| 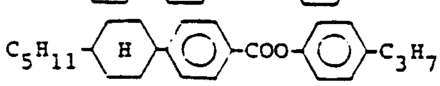 | 3.5 |
| 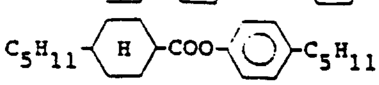 | 8.5 |
| 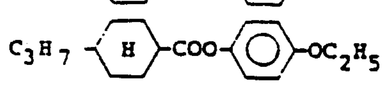 | 8.5 |

Table 6

| | Conventional Example(ZLI-1701) | Example 1 | Example 2 |
|---|---|---|---|
| $V^{0°}_{90\%}$ (V) | 1.78 | 2.41 | 2.64 |
| $\alpha^{0°}$ | 1.42 | 1.38 | 1.36 |
| $\alpha^{15°}$ | 1.33 | 1.24 | 1.23 |
| $\alpha^{30°}$ | 1.27 | 1.19 | 1.16 |
| $\alpha^{45°}$ | 1.24 | 1.16 | 1.14 |
| $\gamma^{15°,50\%}_{45°,90\%}$ | 1.33 | 1.25 | 1.23 |
| $Tr^{*}$ (ms) | 6.4 | 11 | 12 |
| $Td^{**}$ (ms) | 20 | 38 | 41 |
| $\eta$ ($mm^2 \cdot s^{-1}$) | 15 | 30 | 34 |

* Tr is a response time in a case where the voltage has applied from 0 (V) to 4 x $V^{0°}_{90\%}$ (V).

** Td is a recovery time in a case where the voltage has applied from 4 x $V^{0°}_{90\%}$ to 0 (V).

Although the present invention has been fully described by way of examples with reference to the accompanying drawings, it is to be noted that various changings and modifications will be apparent to those skilled in the art. Therefore, unless otherwise such changings and modifications depart from the scope of the present invention, they should be construed as included therein.

**Claims**

**1.** A mixed nematic liquid-crystal composition which comprises:
- a 2-(4-alkoxyphenyl)-5-alkylpyrimidine compound of the formula

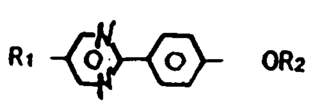

wherein $R_1 = C_nH_{2n+1}$, $R_2 = C_mH_{2m+1}$, n = 1-12 and m = 1-12;

- a cyanobiphenyl compound which is a member selected from the group consisting of

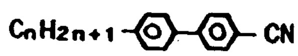 , wherein n = 2 - 6

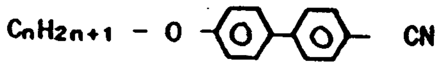 , wherein n = 1 - 7

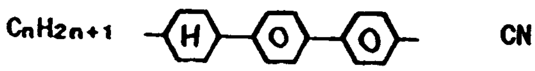 , wherein n = 1 - 7;

- a low-viscosity material satisfying the following two conditions:
  (1) molecular terminal groups are alkyl group or alkoxy group, and
  (2) viscosity ($\eta$) at 20° C temperature is 20 $mm^2 \cdot s^{-1}$ lower; and
- a high clearing-point material satisfying the following four conditions:
  (1) molecular terminal groups ar alkyl group or alkoxy group,
  (2) molecule has at least one cyclohexane ring or more therein,
  (3) molecule does not contain one or more ester linkages; and
  (4) clearing point ($T_{cp}$) is 100° C or higher,

characterized in that the composition comprises one or more compounds which are effective in preventing the formation of the smectic phase, said compounds(s) being selected from the group consisting of:

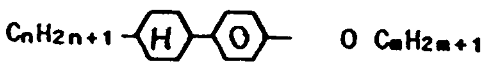 (n = 1-4, m = 1-4)

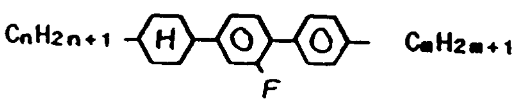 (n = 1-7, m = 1-7)

**2.** A mixed nematic liquid-crystal composition according to claim 1, characterized in that the low-viscosity material comprises at least one compound which is a member selected from the group consisting of:

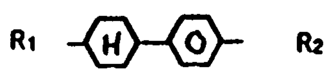

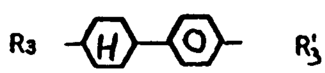

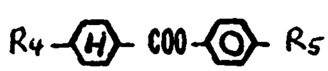

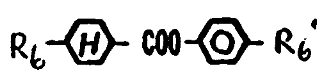

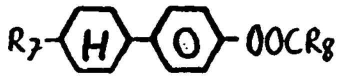

wherein $R_1$ through $R_8$ represent a straight-chain alkyl group of 1 to 6 carbon atoms and $R_3$' and $R_6$'

represent straight-chain alkoxy groups of 1 to 6 carbon atoms.

**3.** A mixed nematic liquid-crystal composition according to claim 1 or 2, characterized in that the high clearing-point material comprises at least one compound which is a member selected from the group consisting of:

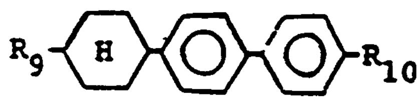

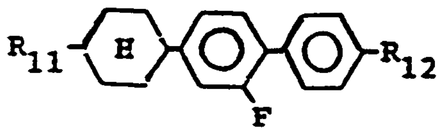

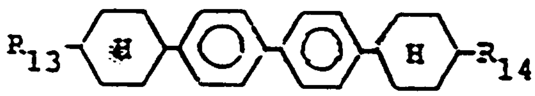

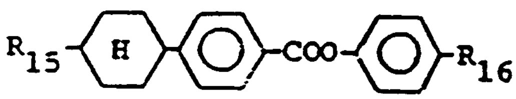

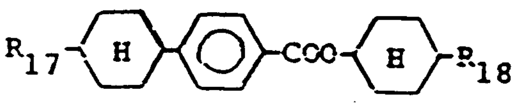

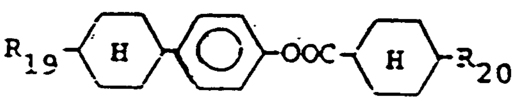

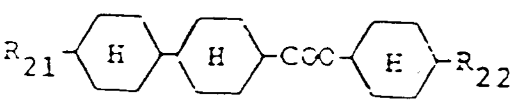

wherein $R_9$ through $R_{22}$ represent a straight-chain alkyl group of 1 to 10 carbon atoms.

**4.** A mixed nematic liquid-crystal composition according to one of the claims 1 to 3, characterized in that the pyrimidine compounds and the cyanobiphenyl compounds are respectively 3% or more by weight in content.

**5.** A mixed nematic liquid-crystal composition which contains the following compounds:

| Compounds | Composition ratio (wt%) |
|---|---|
| 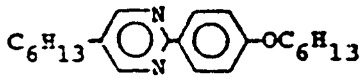 | 5.5 |
| 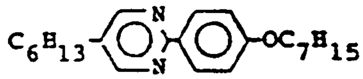 | 5.5 |
| 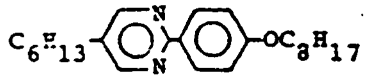 | 5.5 |
| 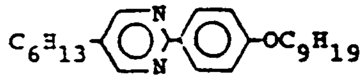 | 5.5 |
| 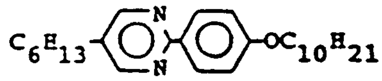 | 5.5 |
| 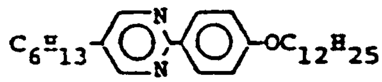 | 5.5 |
| 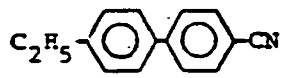 | 6.7 |
| 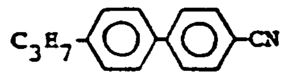 | 5.4 |
| 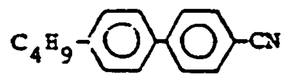 | 4.7 |
| 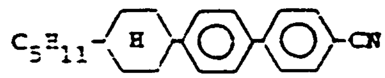 | 4.7 |
| 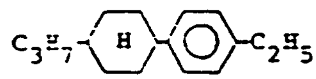 | 11.4 |
| 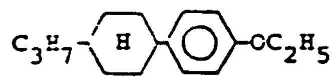 | 6.7 |
| 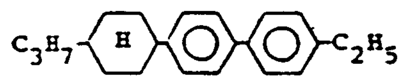 | 1.3 |
| 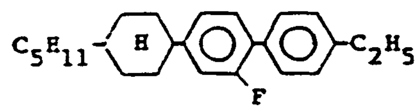 | 10.0 |
| 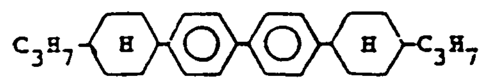 | 2.7 |
| 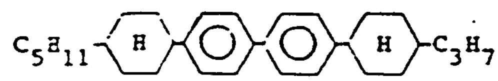 | 4.0 |
| 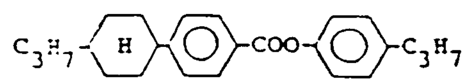 | 5.4 |
| 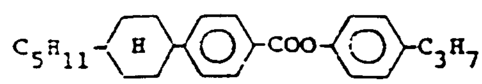 | 4.0 |

**6.** A mixed nematic liquid-crystal mixture which contains the following compounds:

| Compounds | Composition ratio (wt%) |
| --- | --- |
| 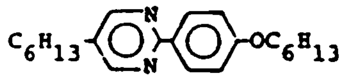 | 5.5 |
| 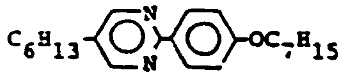 | 5.5 |
| 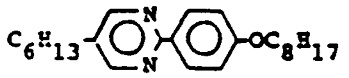 | 5.5 |
| 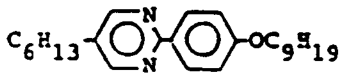 | 5.5 |
| 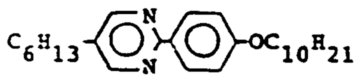 | 5.5 |
| 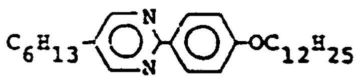 | 5.5 |
| 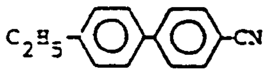 | 4.1 |
| 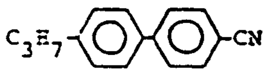 | 4.1 |
| 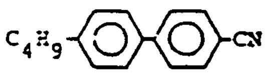 | 4.3 |
| 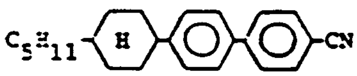 | 3.5 |
| 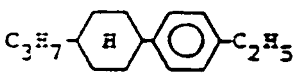 | 8.5 |
| 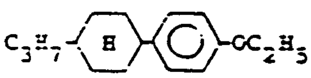 | 5.0 |
| 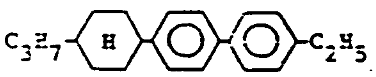 | 1.0 |
| 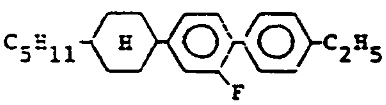 | 7.5 |
| 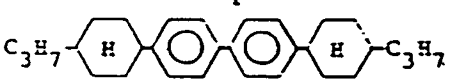 | 2.5 |
| 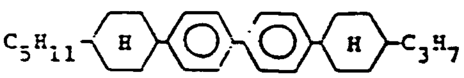 | 2.5 |
| 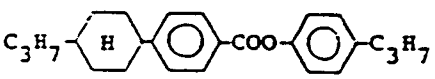 | 3.5 |
| 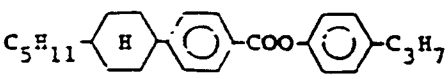 | 3.5 |
| 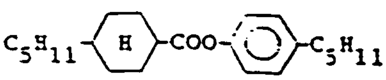 | 8.5 |
| 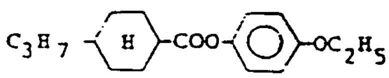 | 8.5 |

## Revendications

**1.** Une composition de cristaux liquides mixte nématique comprenant:

- un composé 2-(4-alkoxyphényl)-5-alkylpyrimidine de formule

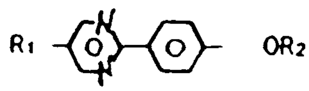

où R1 = CnH2n + 1, R2 = CmH2m + 1, n = 1-12 et m = 1-12;

- un composé cyanobiphényle qui est un élément sélectionné dans le groupe composé de :

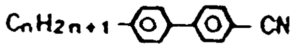

, où n = 2 - 6

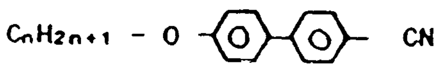

, où n = 1 - 7

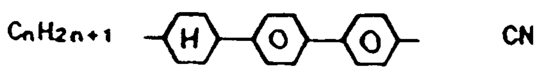

, où n = 1 - 7;

- un matériau à faible viscosité satisfaisant aux deux conditions suivantes :
  (1) les groupes moléculaires terminaux sont un groupe alkyle ou un groupe alkoxy, et
  (2) la viscosité ($\eta$) à une température de 20° C est de 20 $mm^2.s^{-1}$ ou inférieure ; et
- un matériau ayant un point de clarté élevé, satisfaisant aux quatre conditions suivantes :
  (1) les groupes moléculaires terminaux sont un groupe alkyle ou un groupe alkoxy,
  (2) la molécule comprend au moins un noyau de cyclohexane ou plus,
  (3) la molécule ne comprend pas une ou plusieurs liaisons ester ; et
  (4) le point de clarté (Tcp) est de 100° C ou supérieur,

caractérisée en ce que la composition comprend un ou plusieurs composants qui sont efficaces pour empêcher la formation de la phase smectique, ledit (lesdits) composant(s) étant choisi(s) dans le groupe composé de :

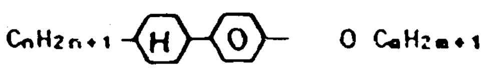

(n = 1-4, m = 1-4)

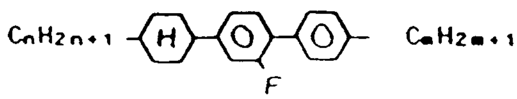

(n = 1-7, m = 1-7)

**2.** Une composition de cristaux liquides mixte nématique selon la revendication 1, caractérisée en ce que le matériau à faible viscosité comprend au moins un composé qui est un élément sélectionné dans le groupe composé de :

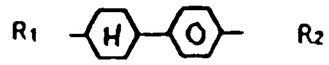

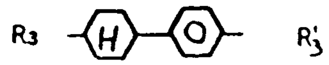

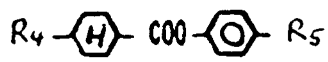

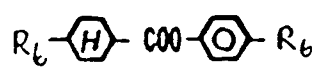

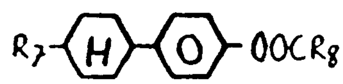

où R1 à R8 représentent un groupe alkyl en chaine droite contenant de 1 à 6 atomes de carbone, et R3' et R6' représentent des groupes alkoxy en chaîne droite contenant de 1 à 6 atomes de carbone.

**3.** Une composition de cristaux liquides mixte nématique selon la revendication 1 ou 2, caractérisée en ce que le matériau ayant un point de clarté élevé comprend au moins un composé qui est un élément choisi dans le groupe composé de :

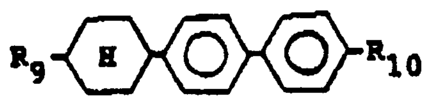

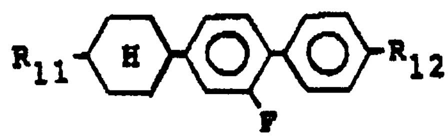

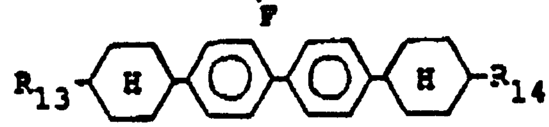

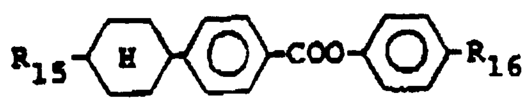

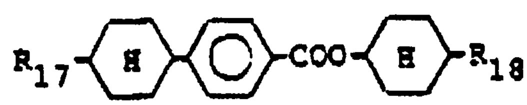

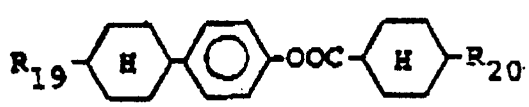

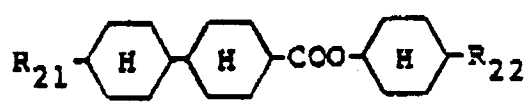

où R9 à R22 représentent un groupe alkyle en chaîne droite contenant de 1 à 10 atomes de carbone.

**4.** Une composition de cristaux liquides mixte nématique selon l'une des revendications 1 à 3, caractérisée en ce que les composés pyrimidines et les composés cyanobiphényles sont respectivement présents à un niveau de 3% en masse ou plus.

**5.** Une composition de cristaux liquides mixte nématique contenant les composés suivants :

| Composés | Rapport de la composition (% en masse) |
|---|---|
| 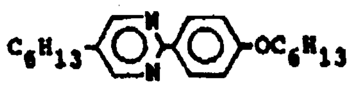 | 5.5 |
| 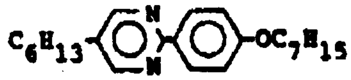 | 5.5 |
| 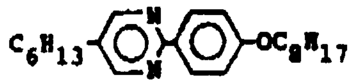 | 5.5 |
| 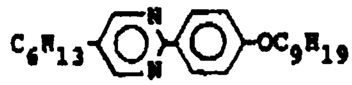 | 5.5 |
| 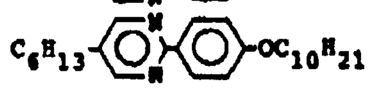 | 5.5 |
| 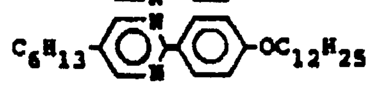 | 5.5 |
| 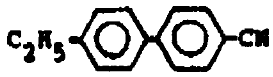 | 6.7 |
| 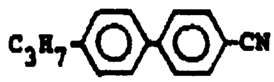 | 5.4 |
| 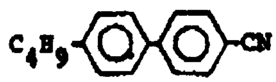 | 4.7 |
| 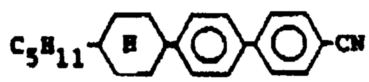 | 4.7 |
| 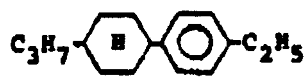 | 11.4 |
| 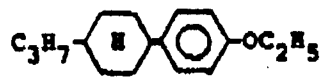 | 6.7 |
| 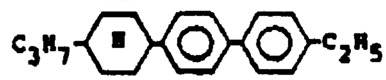 | 1.3 |
| 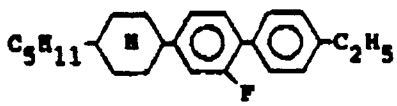 | 10.0 |
| 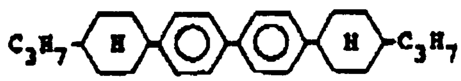 | 2.7 |
| 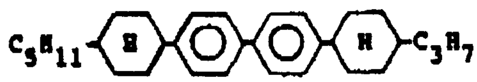 | 4.0 |
| 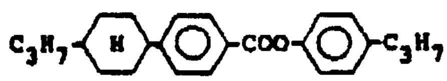 | 5.4 |
| 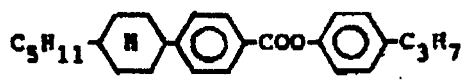 | 4.0 |

**6.** Un mélange de cristaux liquides mixte nématique contenant les composés suivants:

| Composés | Rapport de la composition (% en masse) |
|---|---|
| 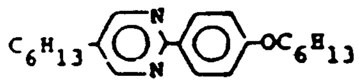 | 5.5 |
| 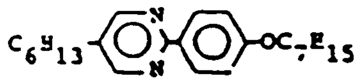 | 5.5 |
| 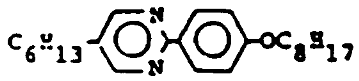 | 5.5 |
| 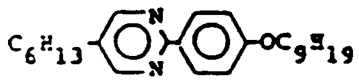 | 5.5 |
| 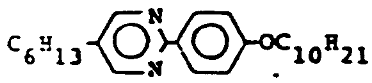 | 5.5 |
| 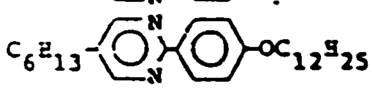 | 5.5 |
| 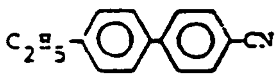 | 4.1 |
| 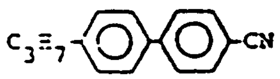 | 4.1 |
| 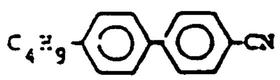 | 4.3 |
| 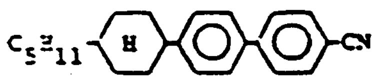 | 3.5 |
| 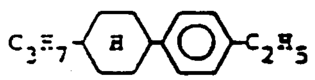 | 8.5 |
| 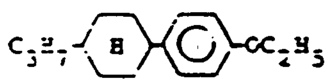 | 5.0 |
| 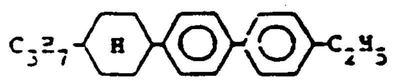 | 1.0 |
| 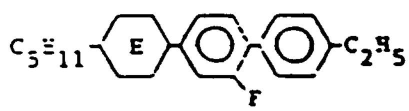 | 7.5 |
| 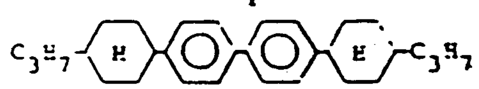 | 2.5 |
| 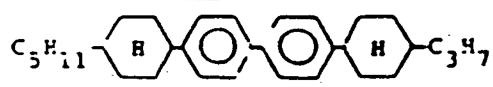 | 2.5 |

| Composés | Rapport de la composition (% en masse) |
|---|---|
| 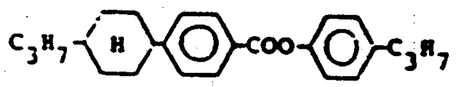 | 3.5 |
| 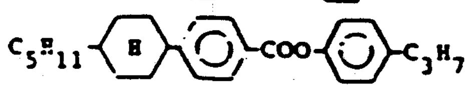 | 3.5 |
| 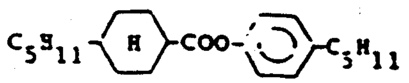 | 8.5 |
| 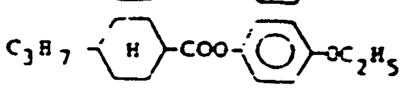 | 8.5 |

## Patentansprüche

**1.** Nematische Mischflüssigkristallzusammensetzung, die:

- eine 2-(4-Alkoxyphenyl)-5-alkylpyrimidinverbindung der Formel

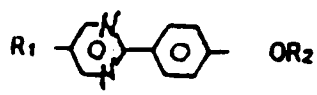

worin $R_1 = C_nH_{2n+1}$, $R_2 = C_mH_{2m+1}$, n = 1-12 und m = 1-12;

- eine aus der Gruppe

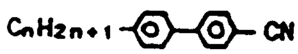 , worin n = 2 - 6

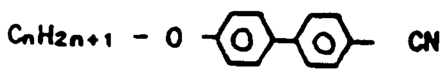 , worin n = 1 - 7

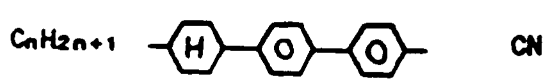 , worin n = 1 - 7

- eine niedrigviskose Substanz, die die folgenden zwei Bedingungen erfüllt:
  (1) Die Endgruppen des Moleküls sind Alkyl- oder Alkoxygruppen und
  (2) die Viskosität ($\eta$) bei einer Temperatur von 20° C beträgt 20 $mm^2 \cdot s^{-1}$ oder weniger; und
- eine Substanz mit hohem Klärpunkt enthält, die die folgenden vier Bedingungen erfüllt:
  (1) Die Endgruppen des Moleküls sind Alkyl- oder Alkoxygruppen,
  (2) das Molekül weist mindestens einen oder mehrere Cyclohexanringe auf,
  (3) das Molekül ist frei von einer oder mehreren Esterbindungen;
  (4) der Klärpunkt (Tcp) beträgt 100° C oder mehr enthält,

dadurch gekennzeichnet, daß die Zusammensetzung eine oder mehrere Verbindungen enthält, deren Wirkung darin besteht, daß sie die Bildung der smektischen Phase verhindert, wobei jene Verbindung(en) aus der Gruppe:

(n = 1-4, m = 1-4)

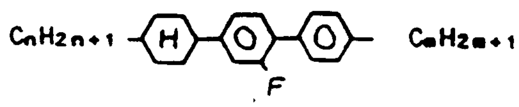

(n = 1-7, m = 1-7) ausgewählt ist (sind).

2. Nematische Mischflüssigkristallzusammensetzung nach Anspruch 1, dadurch gekennzeichnet, daß das niedrigviskose Material mindestens eine, aus der Gruppe

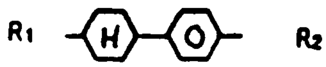

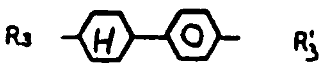

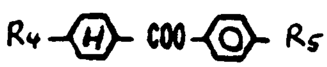

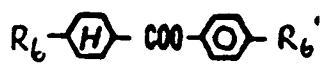

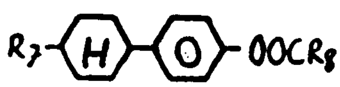

worin $R_1$ bis $R_8$ eine geradkettige Alkylgruppe mit 1 bis 6 Kohlenstoffatomen und $R_3$' und $R_6$' geradkettige Alkoxygruppen mit 1 bis 6 Kohlenstoffatomen darstellen, ausgewählte Verbindung enthält.

3. Nematische Mischflüssigkristallzusammensetzung nach Anspruch 1 oder 2, dadurch gekennzeichnet, daß das Material mit hohem Klärpunkt mindestens eine, aus der Gruppe

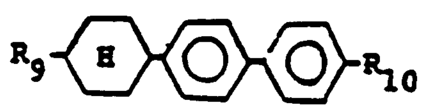

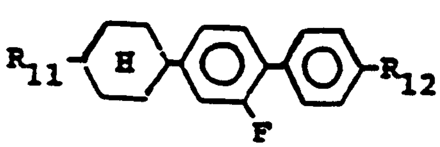

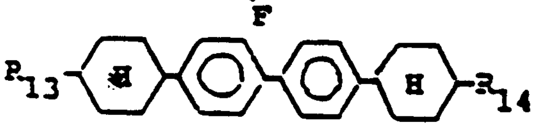

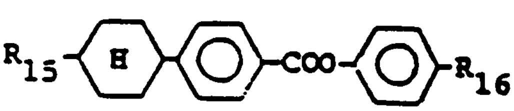

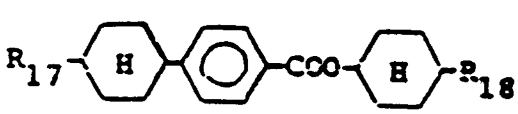

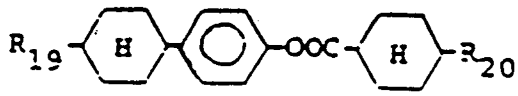

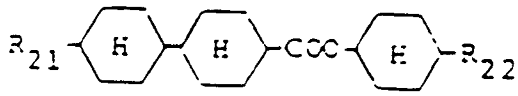

worin $R_9$ bis $R_{22}$ eine geradkettige Alkylgruppe mit 1 bis 10 Kohlenstoffatomen darstellen, ausgewählte Verbindung enthält.

**4.** Nematische Mischflüssigkristallzusammensetzung nach einem der Ansprüche 1 bis 3, dadurch gekennzeichnet daß der Anteil der Pyrimidinverbindungen und der Cyanbiphenylverbindungen jeweil 3 Gew.-% oder mehr beträgt.

**5.** Nematische Mischflüssigkristallzusammensetzung, die die folgenden Verbindungen enthält:

| Verbindungen | Anteil in der Zusammensetzung (Gew.-%) |
|---|---|
| 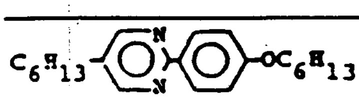 | 5,5 |
| 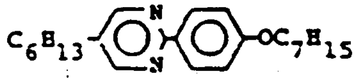 | 5,5 |
| 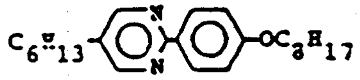 | 5,5 |
| 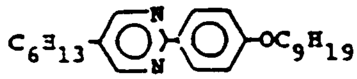 | 5,5 |
| 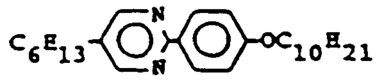 | 5,5 |
| 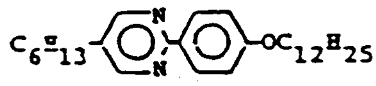 | 5,5 |
| 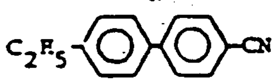 | 6,7 |
| 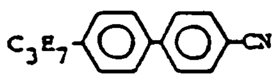 | 5,4 |
| 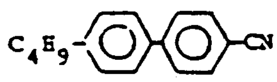 | 4,7 |
| 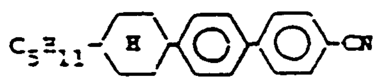 | 4,7 |
| 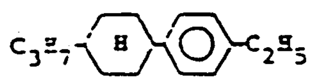 | 11,4 |
| 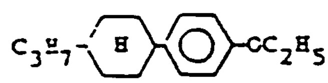 | 6,7 |
| 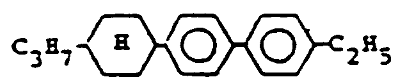 | 1,3 |
| 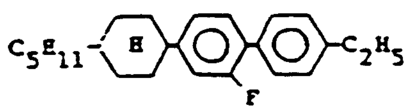 | 10,0 |
| 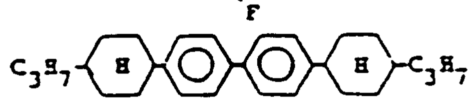 | 2,7 |
| 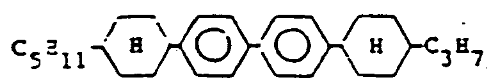 | 4,0 |
| 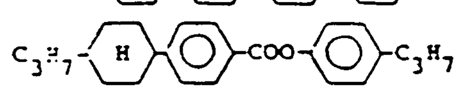 | 5,4 |
| 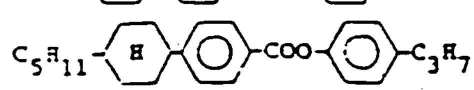 | 4,0 |

**6.** Nematische Mischflüssigkristallmischung, die die folgenden Verbindungen enthält:

| Verbindungen | Anteil in der Zusammensetzung (Gew.-%) |
|---|---|
| 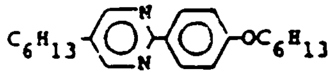 | 5,5 |
| 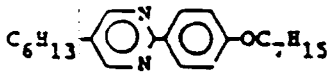 | 5,5 |
| 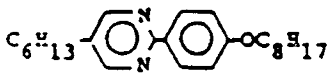 | 5,5 |
| 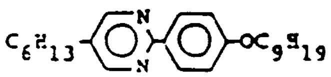 | 5,5 |
| 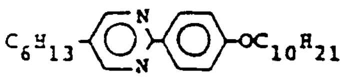 | 5,5 |
| 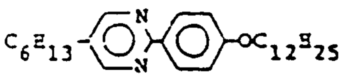 | 5,5 |
| 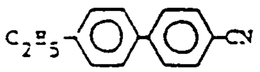 | 4,1 |
| 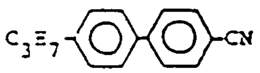 | 4,1 |
| 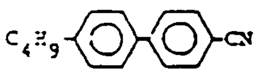 | 4,3 |
| 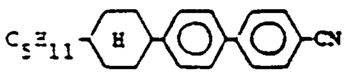 | 3,5 |
| 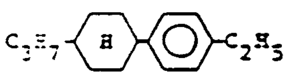 | 8,5 |
| 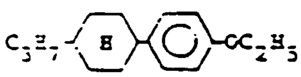 | 5,0 |
| 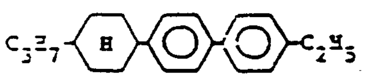 | 1,0 |
| 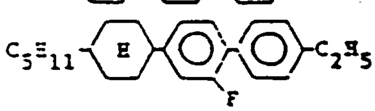 | 7,5 |
| 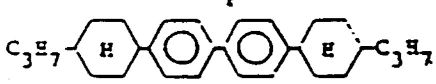 | 2,5 |
| 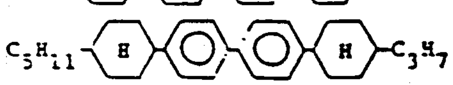 | 2,5 |
| 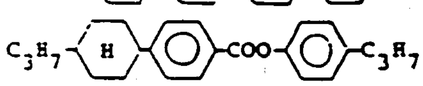 | 3,5 |
| 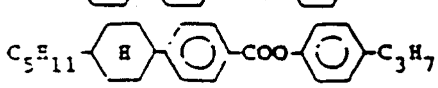 | 3,5 |
| 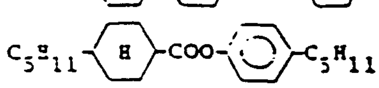 | 8,5 |
| 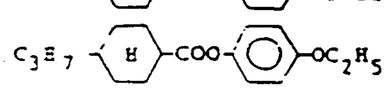 | 8,5 |

FIG. 1a

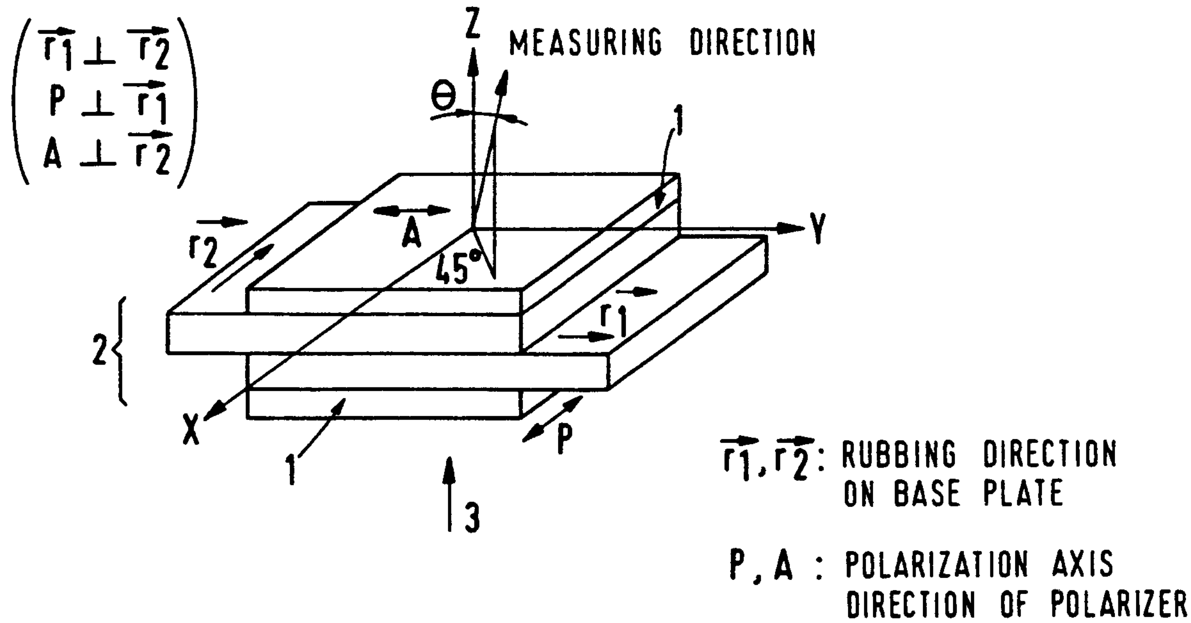
$\vec{r_1} \perp \vec{r_2}$
$P \perp \vec{r_1}$
$A \perp \vec{r_2}$
Z
MEASURING DIRECTION
θ
1
A
Y
$\vec{r_2}$
45°
$\vec{r_1}$
2
X
1
P
3
$\vec{r_1}, \vec{r_2}$: RUBBING DIRECTION ON BASE PLATE
P, A : POLARIZATION AXIS DIRECTION OF POLARIZER

FIG. 1b

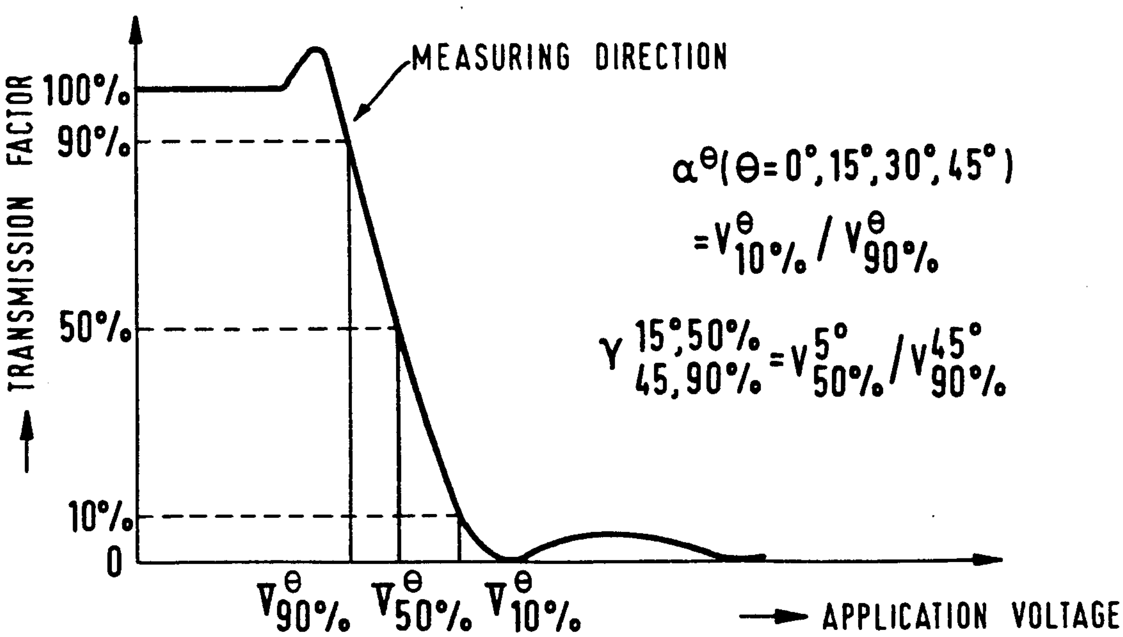
TRANSMISSION FACTOR
100%
90%
50%
10%
0
MEASURING DIRECTION
$\alpha^{\theta}(\theta = 0°, 15°, 30°, 45°)$
$= V^{\theta}_{10\%} / V^{\theta}_{90\%}$
$\gamma^{15°, 50\%}_{45, 90\%} = V^{5°}_{50\%} / V^{45°}_{90\%}$
$V^{\theta}_{90\%}$ $V^{\theta}_{50\%}$ $V^{\theta}_{10\%}$
APPLICATION VOLTAGE

FIG. 2a

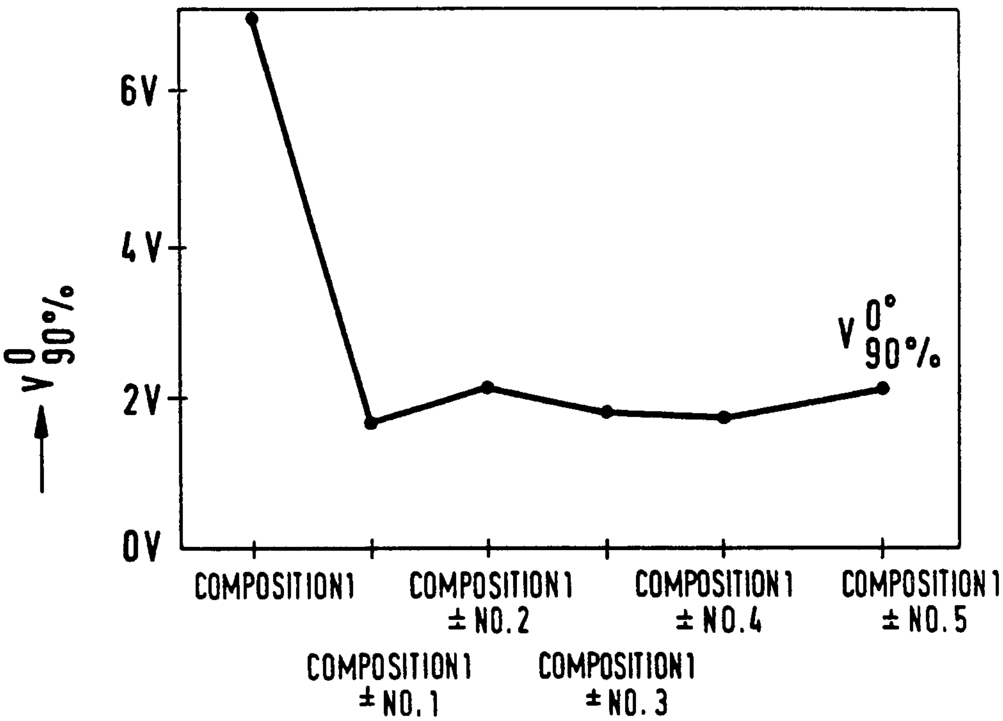
6V
4V
2V
0V
$V^{0}_{90\%}$
$V^{0°}_{90\%}$
COMPOSITION 1
COMPOSITION 1 ± NO. 1
COMPOSITION 1 ± NO. 2
COMPOSITION 1 ± NO. 3
COMPOSITION 1 ± NO. 4
COMPOSITION 1 ± NO. 5

FIG. 2b

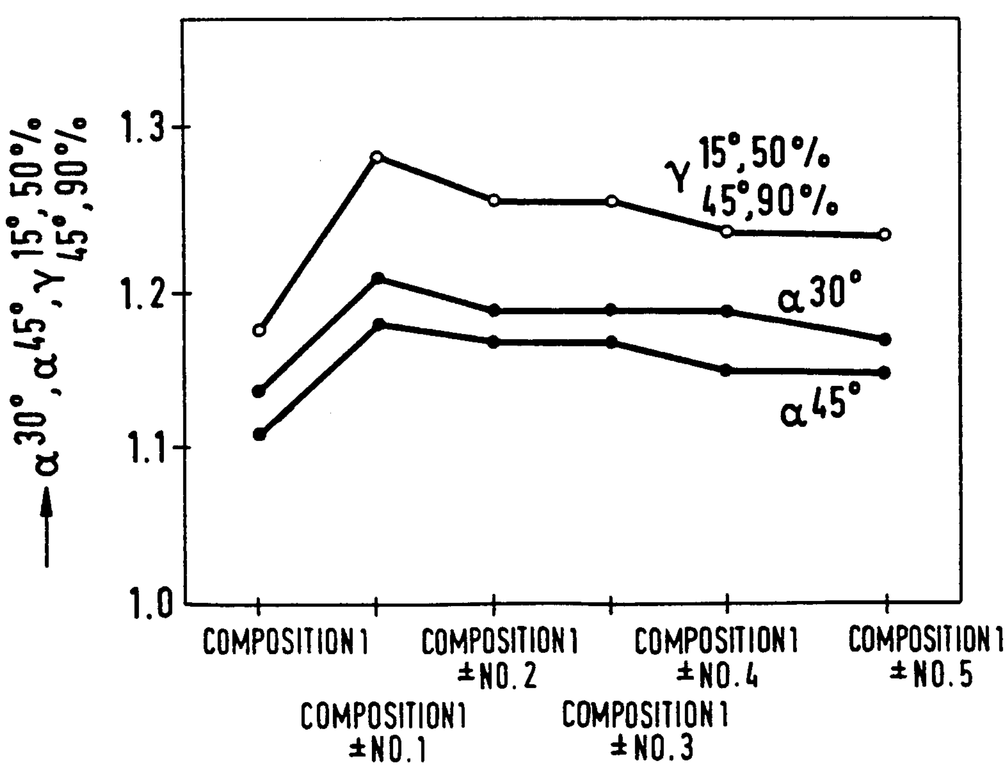
1.3
1.2
1.1
1.0
$\alpha^{30°}, \alpha^{45°}, \gamma^{15°, 50\%}_{45°, 90\%}$
$\gamma^{15°, 50\%}_{45°, 90\%}$
$\alpha^{30°}$
$\alpha^{45°}$
COMPOSITION 1
COMPOSITION 1 ± NO. 1
COMPOSITION 1 ± NO. 2
COMPOSITION 1 ± NO. 3
COMPOSITION 1 ± NO. 4
COMPOSITION 1 ± NO. 5

FIG. 3

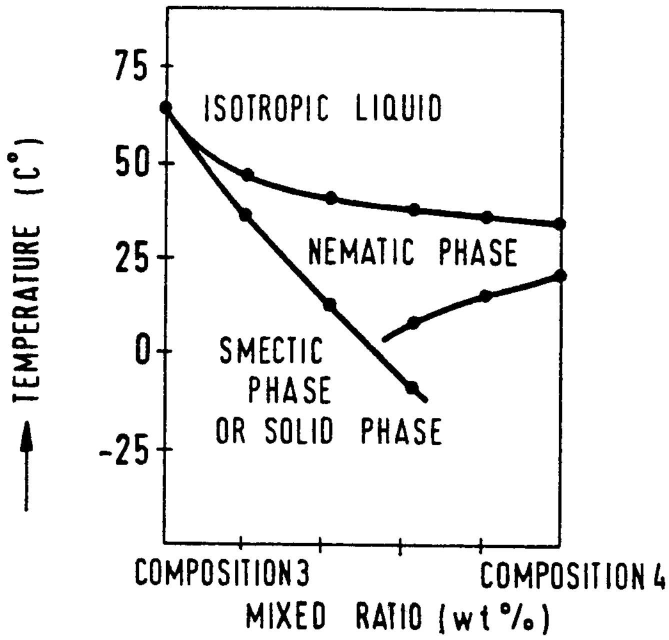
75
50
25
0
-25
TEMPERATURE (C°)
ISOTROPIC LIQUID
NEMATIC PHASE
SMECTIC
PHASE
OR SOLID PHASE
COMPOSITION 3
COMPOSITION 4
MIXED RATIO (wt%)

FIG. 4

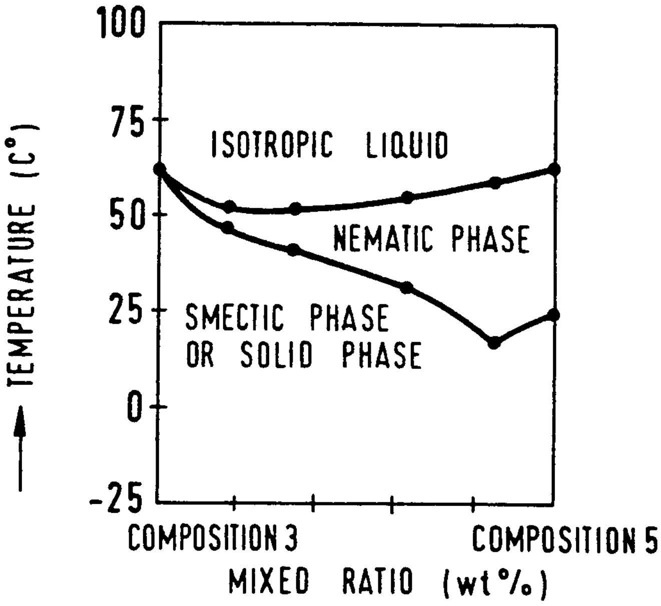
100
75
50
25
0
-25
TEMPERATURE (C°)
ISOTROPIC LIQUID
NEMATIC PHASE
SMECTIC PHASE
OR SOLID PHASE
COMPOSITION 3
COMPOSITION 5
MIXED RATIO (wt%)